# EUROPEAN PATENT APPLICATION

(11) **EP 4 733 440 A1**
(43) Date of publication of application: **29.04.2026**
(21) Application number: 25208694.7
(22) Date of filing: 14.10.2025
(51) Int. Cl.: C25B 1/042, C25B 1/23, C25B 11/077, C25B 13/07, C25B 15/08, C10G 2/00

(54) **SYSTEMS AND METHODS FOR WASTEWATER UTILIZATION**

(30) Priority: 25.10.2024 US 202418926891
(71) Applicant: Aerospace Carbon Solutions LLC, Evendale, OH 45215 (US)
(72) Inventor: LIU, Mingfei, Niskayuna, NY 12309-1027 (US); SUN, Changjie, Niskayuna, NY 12309-1027 (US)
(74) Representative: Openshaw & Co.

(57) **Abstract**

Systems and methods for wastewater utilization are described herein. In some approaches, the system (100) comprises a solid oxide electrolyzer (104) and a syngas upgrading unit (112). The solid oxide electrolyzer (104) comprises a first electrode (128), a second electrode (130) and an electrolyte (132). The syngas upgrading unit (112) receives at least a portion of a product stream (110) from the solid oxide electrolyzer (104) and generates a wastewater stream (102) comprising water and a hydrocarbon species. A recycle line (120) recycles the wastewater stream (102) from the syngas upgrading unit (112) to the first electrode (128) of the solid oxide electrolyzer (104). In some embodiments, the system (100) comprises a carbon dioxide supply (108) to co-feed carbon dioxide to the solid oxide electrolier (104) with the wastewater stream (102). In some embodiments, the system (100) comprises a separation unit (114) that separates the wastewater stream (102) from a product stream (110) of the syngas upgrading unit (112).

## Description

### TECHNICAL FIELD

These teachings relate generally to methods for utilizing wastewater and, in particular, for utilizing wastewater from syngas upgrading processes.

### BACKGROUND

Chemical manufacturing commonly involves energy-intensive and/or resource intensive processes, which may contribute to energy consumption and greenhouse gas emissions. For example, traditional approaches for synthesis gas ("syngas") rely on chemical approaches such as coal gasification or steam reforming of natural gas to produce syngas. The syngas can then be upgraded to fuels or chemicals through methanol synthesis, a Fischer-Tropsch (FT) process, or an alcohol synthesis, etc. Such syngas upgrading processes produce a large amount of water as a byproduct, which contains a variety of impurities in the form of organic components. The byproduct water stream must be properly treated to meet environmental regulations and to allow potential discharge or reuse. Typical treatment may include physical, chemical and/or biological processes to remove the contaminants from the water product. Accordingly, approaches for energy efficient and environmentally friendly syngas production and upgrading may be desirable.

### BRIEF DESCRIPTION OF DRAWINGS

Various needs are at least partially met through provision of the systems and methods for wastewater utilization described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a flow diagram as configured in accordance with various embodiments of these teachings;
FIG. 2 is a chemical equation for reactions utilizing wastewater streams in a solid oxide electrolyzer;
FIG. 3A and 3B illustrate chemical reactions for utilizing wastewater streams in a solid oxide electrolyzer; and
FIG. 4 is a process flow diagram for a method of wastewater utilization in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The systems and methods for wastewater utilization described herein recycle wastewater from a syngas upgrading process. The approaches described herein incorporate wastewater generated as a byproduct from a syngas upgrading process into a feedstock for a solid oxide electrolyzer (SOE) without any water treatment. Through high temperature electrolysis in the SOE, the wastewater is electrolyzed to form a hydrogen (H₂) product. The hydrogen (H₂) can be used directly as a feedstock for syngas upgrading, as a fuel, as an input for chemical processes such as ammonia synthesis, and/or as an input for fuel refining processes such as sustainable aviation fuel (SAF) refining. In addition, in some aspects, the system also includes introducing carbon dioxide (CO₂) to the SOE to form syngas. The syngas could be sent to a syngas upgrading unit to convert the syngas to at least one secondary chemical.

Syngas is then converted in the downstream process to at least one secondary chemical via the syngas upgrading process. The syngas, which is a combination of carbon monoxide and hydrogen, is upgraded, that is, converted into a valuable chemical or fuel. The syngas upgrading process may include at least one of a methanol synthesis, a Fischer-Tropsch (FT) process, an alcohol synthesis, a fermentation, or an electrochemical synthesis process. For example, syngas may be upgraded downstream of the solid oxide electrolyzer via methanol synthesis. In another example, the syngas is upgraded downstream in a Fischer-Tropsch synthesis process to produce hydrocarbons of various molecular weights. The byproducts from these processes, herein referred to as "wastewater," is then directly recycled back to the SOE without being subject to wastewater treatment.

Traditionally, syngas upgrading processes may produce a large amount of water as a byproduct which contain impurities or contaminants. Some common impurities found in the wastewater stream includes oxygenates (e.g., methanol, formaldehyde, acetone and other ketones), organic acids (e.g., formic acid, lactic acid, etc.), hydrocarbons (light hydrocarbons, e.g. C1-C4 that dissolve in water, and aromatic compounds, e.g. benzene, toluene, xylene, etc.). Such impurities often need to be removed before discharge and reuse, which requires downstream water treatment facilities.

Advantageously, the systems and methods described herein involve the integrated operation of the syngas upgrading process in conjunction with the solid oxide electrolyzer. For example, the methods and systems described herein leverage the wastewater from a downstream process to be recovered and reutilized directly as feedstock in the upstream process (SOE), without any additional water treatment. Additionally, recycling the wastewater from the syngas upgrading process with an SOE can integrate heat from the syngas upgrading process to reduce SOE electricity, improve the efficiency, and reduce emissions for hydrogen or syngas production.

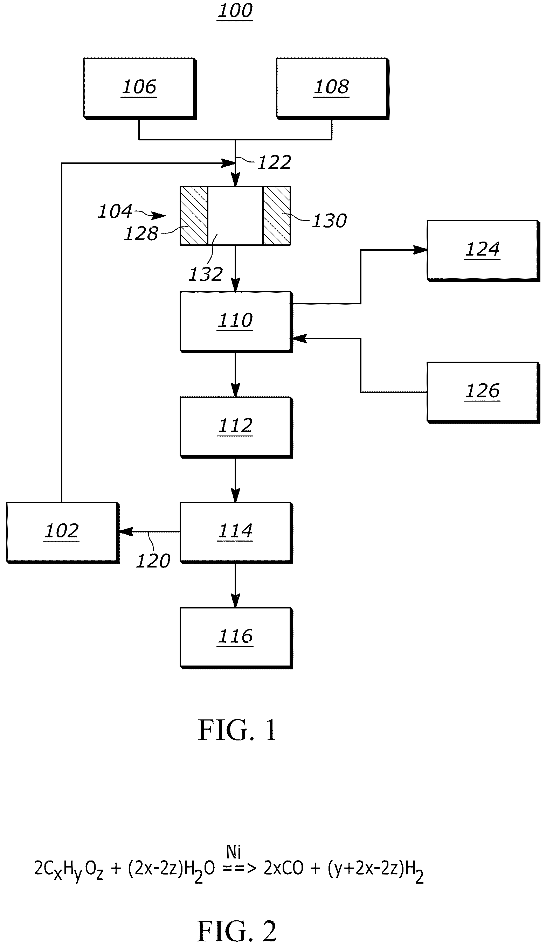

Referring now to the figures, FIG. 1 shows a system 100 for utilizing wastewater 102 in a power-to-liquid process (PTL). The system 100 may incorporate the wastewater 102 generated from a syngas upgrading unit 112 into a feedstock stream 122. The system 100 includes a solid oxide electrolyzer 104 and a syngas upgrading unit 112.

The solid oxide electrolyzer 104 is connected to a feedstock stream 122. The feedstock stream 122 comprises a wastewater stream 102 from the syngas upgrading unit 112.The feedstock stream 122 may additionally include water supplied by a water supply 106. The water supply may include a storage tank or the like. In some embodiments, the feedstock stream 122 further comprises carbon dioxide (CO₂) supplied by a carbon dioxide supply 108. The solid oxide electrolyzer 104 comprises a first electrode 128, a second electrode 130 and an electrolyte 132 disposed between the first electrode 128 and the second electrode 130.

In some aspects, the first electrode 128 may comprise a mixed ionic-electronic conductor. Examples of suitable mixed ionic-electronic conductors include at least one of (M-Sr)TiO3 where M comprises lanthanum (La) or yttrium (Y), Sr₂MgMoO₆, or LSCM (La,Sr)(Cr,Mn)O₃).

In some aspects, the first electrode 128 may comprise a composite material including a metal and a ceramic. Examples of suitable metals may include at least one of nickel (Ni), copper (Cu), iron (Fe), or cobalt (Co). Examples of suitable ceramics may include at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M is at least one of yttrium (Y), gadolinium (Gd), samarium (Sm), erbium (Er), scandium (Sc), or ytterbium (Yb).

In some configurations, the first electrode 128 may further comprise a catalyst. Examples of suitable catalysts include at least one of at least one of nickel (Ni), copper (Cu), cobalt (Co), iron (Fe), manganese (Mn), chromium (Cr), titanium (Ti), molybdenum (Mo), rhodium (Rh), ruthenium (Ru), doped ceria. In some configurations, the first electrode 128 is a cathode.

The second electrode 130 may comprise a mixed ionic-electronic conductor. Examples of suitable mixed ionic-electronic conductors include least one of ABO₃ where A is at least one of lanthanum (La), strontium (Sr), barium (Ba) and B is at least one of cobalt (Co), iron (Fe), manganese (Mn) , chromium (Cr), doped barium cerate-zirconate ((Ba(Zr, Ce, M)O₃, where M is at least one of (Ba(Zr, Ce, M)O₃), where M is at least one of yttrium (Y), gadolinium (Gd), samarium (Sm), erbium (Er), scandium (Sc), or ytterbium (Yb), praseodymium (Pr), iron (Fe), cobalt (Co), etc.), doped ceria, or PrNi2O4. In some configurations, the second electrode 130 may further include a catalyst. Examples of suitable catalysts include at least one of at least one of rhodium (Rh), ruthenium (Ru), or doped ceria. In some configurations, the second electrode 130 is an anode.

The electrolyte 132 may comprise at least one of yttria stabilized zirconia (YSZ), samarium-doped cera oxide (SDC), gadolinium-doped ceria oxide (GDC), doped bismuth oxide, doped orthorhombic perovskite (LaGaO₃), or doped barium cerate-zirconate (Ba(Zr, Ce, M)O₃), where M is at least one of yttrium (Y), gadolinium (Gd), samarium (Sm), erbium (Er), scandium (Sc), or ytterbium (Yb).

The solid oxide electrolyzer 104 is coupled to an electricity source (not shown in FIG. 1). The electricity source can be grid-based electricity, a renewable electricity source, or combinations thereof. By using renewable electricity sources to operate the solid oxide electrolyzer 104, the system 100 may achieve reduced emissions as compared to operations that use only grid-based electricity and, in some aspects, may achieve near-zero greenhouse gas emissions.

The solid oxide electrolyzer 104 may operate at temperatures between 400 degrees Celsius and about 1000 degrees Celsius. In some embodiments, the heat generated from the syngas upgrading unit 112 can be utilized to preheat the wastewater stream 102 and/or feedstock stream 122 entering the solid oxide electrolyzer 104. This integration may reduce the overall energy consumption and improve the energy efficiency of the solid oxide electrolyzer 104.

The syngas upgrading unit 112 is located downstream of the solid oxide electrolyzer 104 and configured to accept a product stream 110 from the solid oxide electrolyzer 104. In some configurations, the syngas upgrading unit 112 may be configured to accept the product stream 110 from the solid oxide electrolyzer 104, in addition to another syngas source product stream 126. The additional syngas product stream 126 may be mixed with the product stream 110 from the solid oxide electrolyzer 104 and fed to the syngas upgrading unit 112. The syngas upgrading unit 112 can be any equipment suitable to perform a syngas upgrading process to convert syngas in the product stream to at least one secondary chemical. The at least one secondary chemical may be, for example, methanol, sustainable aviation fuel (SAF), diesel, wax, gasoline, light gases, water, ethanol, ethylene, propylene, liquid phase hydrocarbons having a carbon number of C6 or greater, Fischer Tropsch Syncrude, etc. The solid oxide electrolyzer product stream 110 could be connected to a secondary unit 124 for other applications, e.g. as a fuel, or ammonia synthesis, etc.

In one example, the syngas upgrading unit 112 may be configured to perform a Fischer-Tropsch process. In some examples, the syngas upgrading unit 112 includes one or more reactors such as fixed bed, fluidized bed, or slurry bed reactors to carry out the Fischer-Tropsch process to convert syngas to SAF, gasoline, diesel, wax, light gases, water, etc. Other equipment that may be incorporated into the syngas upgrading unit 112 to perform the Fischer-Tropsch process includes a reactor with catalyst, a heat exchanger, compressors, distillation columns, a condenser, etc.

In another example, the syngas upgrading unit 112 may be configured to perform a methanol synthesis process. For example, the syngas upgrading unit 112 includes a reactor such as a shell and tube isothermal fixed bed reactor or an adiabatic fixed bed reactor to convert syngas to methanol. Other equipment that may be incorporated into the syngas upgrading unit 112 to perform the methanol synthesis process includes a reactor with catalyst, a heat exchanger, compressors, distillation columns, a condenser, etc.

In yet other examples, the syngas upgrading unit 112 may be configured to perform a higher alcohols or mixed alcohols synthesis to convert syngas into mixed alcohols (e.g., C1 to C4 alcohols) through catalytic conversion. Such a process may then convert the mixed alcohols to other chemicals and/or fuels. This process may be similar to the methanol synthesis process, but catalyst and process conditions may be optimized for other products, including ethanol, propanol, and butanol. In another example, the syngas upgrading unit 112 may be configured to perform and electrochemical process.

During the syngas upgrading process, the syngas upgrading unit 112 may produce large amounts of water as a by-product, i.e., wastewater. The wastewater stream 102 may contain water (H₂O) and impurities such as oxygenated hydrocarbons, organic acids and hydrocarbons.

The wastewater stream 102 may also include alcohols, and monocarboxilic organic acids. In some examples, the wastewater 102 may include species such as methanol, ethanol, propanol, butanol, pentanol, hexanol, heptanol, octanol, acetic, propanoic, butanoic, pentanoic, hexanoic, pentane, acetone, etc. The concentrations of the impurities can vary based on the specific syngas upgrading process and the characteristics of the feedstock. For example, the concentration of the impurities may be less than 1,000 mg/L.

As illustrated in FIG. 1, the system 100 includes a recycle line 120 configured to recycle the wastewater stream 102 to the solid oxide electrolyzer 104. The wastewater stream 102 may be utilized directly as the feedstock stream 122 for the solid oxide electrolyzer 104 or combined with the feedstock stream 122 and cofed to the solid oxide electrolyzer 104. In the present system 100, the wastewater stream 102 is directly fed to the solid oxide electrolyzer 104, without being subject to any water treatment processes. It is contemplated that recycling the wastewater stream 102 from the syngas upgrading unit 112 reduces capex, overall water consumption and electricity consumption, thus reducing the cost for chemical/fuel production.

In operation, the feedstock stream 122 including the wastewater stream 102 recycled from the syngas upgrading unit 112 is supplied to the first electrode 128 of the solid oxide electrolyzer 104. Electrical energy is provided to the solid oxide electrolyzer 104 to heat the solid oxide electrolyzer 104 to an operating temperature between 400 degrees Celsius and 1000 degrees Celsius.

In the solid oxide electrolyzer 104, the oxygenated hydrocarbons, organic acids and hydrocarbons impurities in the wastewater stream 102 may be reformed to carbon monoxide (CO) and hydrogen (H₂) over the first electrode 128. In traditional approaches, a reducing gas such as hydrogen (H₂) is required to cofeed with steam to prevent electrode (e.g., Ni) oxidation of the at high temperatures. By contrast, the oxygenated hydrocarbons, organic acids, and hydrocarbons impurities in the wastewater stream 102 will be reacted with the water (e.g., a small portion) to produce carbon monoxide (CO) and hydrogen (H₂) which may further provide a reducing atmosphere to avoid oxidation of the first electrode 128. The remaining water from the wastewater stream 102 undergoes high temperature electrolysis to form hydrogen (H₂) and oxygen ions (O²⁻). The hydrogen (H₂) exits the solid oxide electrolyzer 104 and can be used as a feedstock for syngas upgrading, or used as a fuel, or used as input for ammonia synthesis, SAF production, the steel industry, or refinery hydrotreating processes.

In some embodiments, the system 100 further includes a carbon dioxide (CO₂) supply 108 configured to supply carbon dioxide (CO₂) to the solid oxide electrolyzer 104. The carbon dioxide (CO₂) stream may be mixed with the wastewater stream 102 and fed to the first electrode 128 of the solid oxide electrolyzer 104. Carbon dioxide (CO₂) is converted to carbon monoxide (CO) and the wastewater stream 102 is converted to hydrogen (H₂) to produce syngas (CO + H₂) via co-electrolysis in the solid oxide electrolyzer 104. Introducing carbon dioxide (CO₂) in the wastewater stream 102 may optimize the downstream syngas upgrading process (e.g., methanol synthesis, Fischer-Tropsch process) occurring in the syngas upgrading unit 112. For example, the ratio of hydrogen to carbon monoxide (H₂:CO) in the syngas may be adjusted by controlling the ratio of total water supply (i.e., the wastewater stream 102 and water supply 106) to carbon dioxide stream (H₂O:CO₂) supplied to the solid oxide electrolyzer 104. As such, the stochiometric target ratio needed for full conversion of the syngas in the downstream processes may be achieved in the upstream process without the need for additional processes.

Syngas (CO + H₂) exits the solid oxide electrolyzer 104 and is fed to the syngas upgrading unit 112. The syngas upgrading unit 112 converts the syngas to one or more secondary chemicals. In one example, the syngas upgrading unit 112 converts the syngas to methanol via a methanol synthesis process. In another example, the syngas upgrading process converts the syngas to hydrocarbons of various molecular weights via a Fischer-Tropsch process.

In some embodiments, the system 100 further includes a separation unit 114 configured to separate the water byproducts (i.e., the wastewater stream 102) from a desired product of the syngas upgrading unit 112. The separation unit 114 is fluidly coupled to the syngas upgrading unit 112. The separation unit 114 may also separate light hydrocarbon species, such as C1-C4 hydrocarbon species or C1-C6 hydrocarbon species from the desired products (e.g., more valuable products) such as methanol, sustainable aviation fuel (SAF), diesel, wax, gasoline, light gases, water, ethanol, ethylene, propylene, liquid phase hydrocarbons having a carbon number of C6 or greater, Fischer Tropsch Syncrude, etc. The wastewater stream 102 separated by the separation unit 114 may be recycled back to the solid oxide electrolyzer 104. The desired products separated by the separation unit 114 may be provided to storage 116 (e.g., a storage tank) for use as a fuel or to additional processing units for further upgrading processes. The separation unit 125 can be a distillation column, a gas/liquid separator, or a filtration unit.

In some embodiments, the solid oxide electrolyzer 104 may be a ceramic proton conductor solid oxide electrolyzer. The second electrode 130 may comprise an anode. The second electrode 130 comprises at least one of ABO₃ where A is at least one of La, Sr, Ba and B is at least one of Co, Fe, Mn, Cr; doped barium cerate-zirconate ((Ba(Zr, Ce, M)O₃, where M is at least one of Y, Gd, Sm, Er, Sc, Yb, Pr, Fe, Co, etc.); doped ceria; or PrNi₂O₄. The second electrode 130 may further include a catalyst including at least one of Rh, Ru, or doped ceria.

In such a configuration, during operation, a wastewater stream 102 recycled from the syngas upgrading unit 112 is supplied to the second electrode 130 of the solid oxide electrolyzer 104. Electrical energy is provided to the solid oxide electrolyzer 104 to heat the solid oxide electrolyzer 104 to an operating temperature between 400 degrees Celsius and 1000 degrees Celsius. The oxygenated hydrocarbons, organic acids and hydrocarbons impurities in the wastewater stream 102 are converted to water (H₂O) and carbon dioxide (CO₂) during the electrolyzer 104 operation. The presence of the impurities in the wastewater reduces the electrolyzer operating voltage and thus reduces electricity consumption. Hydrogen (H₂) is produced at the first electrode 128 of the solid oxide electrolyzer 104 and can be used as a feedstock for syngas upgrading, or used as a fuel, or used as input, for example, for ammonia synthesis, SAF production, the steel industry, or refinery hydrotreating processes. In some aspects, a carbon dioxide (CO₂) stream 108 may be supplied to the first electrode 128. The product stream 110 may include syngas which forms in the first electrode 128 and exits the solid oxide electrolyzer 104 to be supplied to the syngas upgrading unit 112.

In some embodiments, the solid oxide electrolyzer 104 may be added to an existing syngas production and upgrading system used for converting a hydrocarbon feedstock to syngas and upgrading the syngas to at least one secondary chemical. The solid oxide electrolyzer 104 could be an add-on unit configured for wastewater utilization and may increase the hydrogen (H₂) production capacity by electrolysis of the wastewater stream 102. When carbon dioxide (CO₂) is also supplied from supply 108 with the wastewater stream 102, the solid oxide electrolyzer 104 may further increase the syngas production (H₂ + CO) capacity by co-electrolysis with wastewater 102 and carbon dioxide (CO₂). The generated syngas may be added or mixed with a syngas product stream formed in the existing syngas production and upgrading system and then upgraded to a secondary chemical in a downstream process of the existing syngas production and upgrading system. As such, the recycling and reutilization of the wastewater 102 may increase the total yield of the desired valuable products, reduce water consumption, and reduce the operation cost.

In some embodiments, the product stream 110 can be used directly without being fed to the syngas upgrading unit 112. The entire product stream 110, or a portion thereof, may be supplied to a secondary unit 124 to be directly used as a fuel, or a precursor for ammonia synthesis, SAF production, the steel industry, or refinery hydrotreating processes, etc.

FIG. 2 illustrates an exemplary chemical reaction that can occur within the solid oxide electrolyzer 104. The solid oxide electrolyzer 104 receives a feedstock stream 122 including the wastewater stream (CₓH_{y}O_{z} + H₂O) generated as a byproduct from the syngas upgrading unit 112. The wastewater contains a variety of impurities and/or contaminations of organic components (CₓH_{y}O_{z}). The application of electrical energy to the solid oxide electrolyzer 104 initiates the chemical conversion of the wastewater to syngas (CO + H₂).

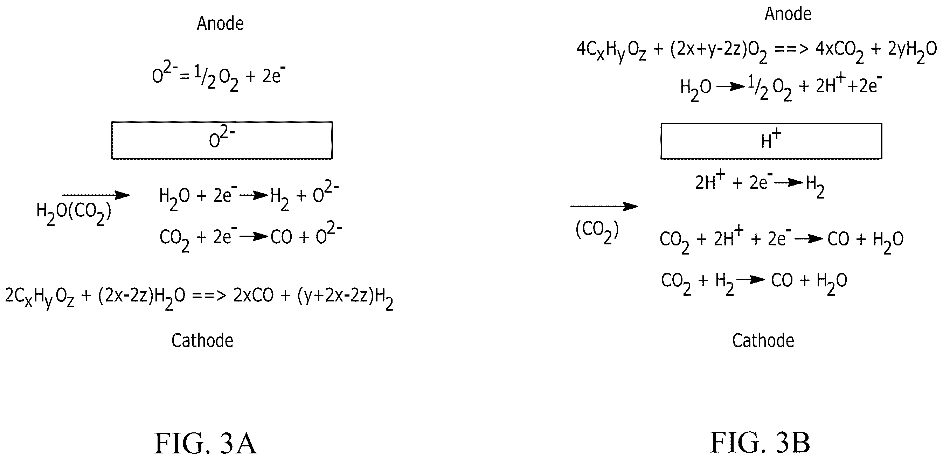

FIG. 3A and 3B illustrate exemplary processes occurring within solid oxide electrolyzer 104 during operation.

Referring to FIG. 3A, the solid oxide electrolyzer 104 may be configured as an oxygen ion conducting electrolyzer and includes a first electrode 128, a second electrode 130, and an oxygen-ion conducting electrolyte 132. The first electrode 128 receives a feedstock stream 122 (H₂O (CO₂)) including the wastewater (CₓH_{y}O_{z} + H₂O) and, optionally, carbon dioxide (CO₂). The oxygen ions (O2-) are oxidized at the second electrode 132 forming oxygen (O₂) and electrons (e⁻). At the first electrode 128, the reduction of water (H₂O) occurs to form hydrogen (H₂) and oxygen ions (O²⁻). The hydrocarbons species (CₓH_{y}O_{z}) in the wastewater will be reacted with water to form carbon monoxide (CO) and hydrogen (H₂) during the electrolysis operation at the first electrode 128. The hydrogen (H₂) may exit the first electrode 128 to be used as a fuel, or used as input for ammonia synthesis, SAF production, the steel industry or a refinery hydrotreating process. When the feedstock 122 includes carbon dioxide (CO₂), under electrolysis operation in the solid oxide electrolyzer 104, the reduction of carbon dioxide (CO₂) occurs to form carbon monoxide (CO) and oxygen ions (O²⁻) on the first electrode 128 side. The formed syngas (CO + H₂) exits the first electrode 128 in a product stream 110 to be used in a syngas upgrading process.

Referring to FIG. 3B, the solid oxide electrolyzer 104 may be configured as a proton conducting electrolyzer and includes a first electrode 128, a second electrode 130, and a proton conducting electrolyte 132. The first electrode 128 receives a feedstock stream 122 including carbon dioxide (CO₂) and the second electrode 130 receives a feedstock stream 122 including the wastewater (CₓH_{y}O_{z} + H₂O). At the second electrode 130, the oxidation of water (H₂O) occurs forming oxygen (O₂), protons (H⁺) and electrons (e⁻). The hydrocarbons species (CₓH_{y}O_{z}) in the wastewater will be converted to carbon dioxide (CO₂) and water (H₂O) during the electrolysis operation at the second electrode 130. The protons (H⁺) may be reduced at the first electrode 128 to form hydrogen (H₂). The hydrogen (H₂) may exit the first electrode 128 to be used as a fuel, or used as input for ammonia synthesis, SAF production, the steel industry or a refinery hydrotreating process. The reduction of carbon dioxide (CO₂) occurs at the first electrode 128 to form carbon monoxide (CO) and water (H₂O). Syngas (CO + H₂) is formed from the carbon monoxide (CO) and hydrogen (H₂) on the first electrode 128. The formed syngas (CO + H₂) exits the first electrode 128 in a product stream 110 to be used in a syngas upgrading process.

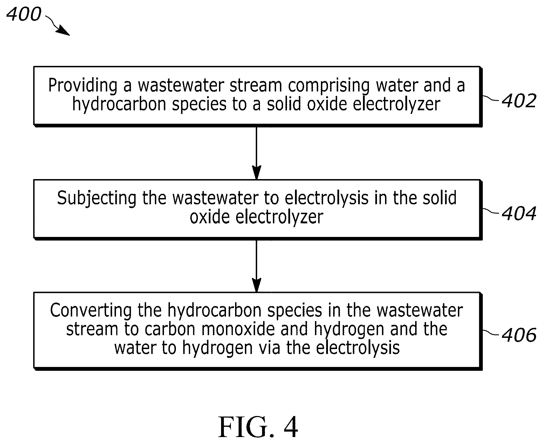

FIG. 4 shows an exemplary method for wastewater utilization in a syngas upgrading process. The method uses a solid oxide electrolyzer to directly use wastewater as a feedstock to produce hydrogen (H₂). The hydrogen (H₂) in the product stream can be used as a fuel, or used as input for ammonia synthesis, SAF production, the steel industry, or refinery hydrotreating processes. The feedstock may further include introducing carbon dioxide (CO₂) in the feedstock to generate syngas (CO + H₂). The method also includes a syngas upgrading process that converts the syngas to at least one secondary chemical. Advantageously, the method involves the recycling and reutilization of the wastewater in the solid oxide electrolyzer, without any additional water treatment processes.

In some embodiments, the solid oxide electrolyzer and the syngas upgrading unit are the same as those described with reference to FIG. 1 above.

At block 402, a wastewater stream 102 is supplied to the solid oxide electrolyzer 104. The wastewater stream 102 is recycled from a downstream syngas upgrading unit 112 and provided to the solid oxide electrolyzer 104 without being subject to any water treatment processes. The wastewater stream 102 comprises water (H₂O) and oxygenated hydrocarbons, organic acids and/or hydrocarbon impurities formed as a byproduct from a syngas upgrading process. In some embodiments, the wastewater stream 102 is supplied to the first electrode 128 of the solid oxide electrolyzer 104. In some embodiments, the wastewater stream 102 is supplied to the second electrode 130 of the solid oxide electrolyzer 104.

In some embodiments, the wastewater 102 stream may additionally comprise carbon dioxide (CO₂) supplied by a carbon dioxide supply 108.

At block 404, the wastewater stream 102 is subject to electrolysis in the solid oxide electrolyzer 104. The solid oxide electrolyzer 104 may operate at temperatures between about 400 °C to about 1000 °C. At such operating temperatures, the wastewater stream 102 may additionally be subject to a reforming process in the solid oxide electrolyzer 104. The hydrocarbons and oxygenated hydrocarbons in the wastewater stream 102 could be reformed to carbon monoxide (CO) and hydrogen (H₂) over a catalyst in first electrode 128.

At block 406, the hydrocarbon species in the wastewater 102 stream are converted to carbon monoxide (CO) and hydrogen (H₂), or carbon dioxide (CO₂) and water (H₂O), and the water (H₂O) in the wastewater 102 stream to Hydrogen (H₂) via electrolysis. When carbon dioxide (CO₂) is introduced in the wastewater 102 stream, syngas (CO + H₂) may be generated via co-electrolysis.

In some embodiments, the method 400 further includes supplying a product stream 110, including the generated hydrogen (H2) and syngas (CO + H₂), to a syngas upgrading unit 112 located downstream the solid oxide electrolyzer 104. The syngas upgrading unit 112 is configured to carry out a syngas upgrading process; examples of such upgrading processes include at least one of a Fisher Tropsch process, a methanol synthesis process, an electrochemical process, or an alcohol synthesis process. During the syngas upgrading process, the generated syngas is converted into valuable products, such as SAF. The syngas upgrading process may produce a large amount of water as a byproduct. The water forms a wastewater stream 102 that is recycled via a recycle line 120 back to the solid oxide electrolyzer 104 to be directly utilized in the electrolysis process which may reduce water consumption by approximately 50%. Additionally, the reutilization of the wastewater 102 can integrate the heat from the syngas upgrading process to reduce the electricity consumption of the solid oxide electrolyzer 104, thus reducing cost for SAF production.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further aspects of the disclosure are provided by the subject matter of the following clauses:
A method for wastewater utilization, the method comprising: providing a wastewater stream comprising water and a hydrocarbon species to a solid oxide electrolyzer (SOE); subjecting the wastewater stream to electrolysis in the solid oxide electrolyzer; and converting the hydrocarbon species in the wastewater stream to carbon monoxide (CO) and hydrogen (H₂) or carbon dioxide (CO₂) and water (H₂O), and the water (H₂O) in the wastewater stream to Hydrogen (H₂) via the electrolysis.

The method of any preceding clause, wherein the wastewater stream is provided to a first electrode of the solid oxide electrolyzer, the solid oxide electrolyzer including an oxygen-ion conducting electrolyte.

The method of any preceding clause, wherein the wastewater stream is provided to a second electrode of the solid oxide electrolyzer, the solid oxide electrolyzer including a proton conducting electrolyte.

The method of any preceding clause, wherein the wastewater stream is subjected to electrolysis at a temperature of between about 400 °C and about 1000 °C.

The method of any preceding clause, wherein the wastewater stream is recycled from a syngas upgrading process.

The method of any preceding clause, wherein the syngas upgrading process is downstream of the solid oxide electrolyzer (SOE).

The method of any preceding clause, wherein the syngas upgrading process receives at least a portion of a syngas product stream from the solid oxide electrolyzer (SOE).

The method of any preceding clause, wherein the syngas upgrading process includes at least one of a Fisher Tropsch process, a methanol synthesis process, an electrochemical process, or an alcohol synthesis process.

The method of any preceding clause, wherein the wastewater stream is recycled from the syngas upgrading process without being subject to water treatment.

The method of any preceding clause, further comprising providing a carbon dioxide (CO₂) stream to the solid oxide electrolyzer (SOE) with the wastewater stream.

The method of any preceding clause, further comprising generating a syngas product stream from the carbon dioxide (CO₂) and wastewater stream via the electrolysis.

The method of any preceding clause, wherein the first electrode comprises a composite phase that includes a metal phase including at least one of nickel (Ni), copper (Cu), iron (Fe), or cobalt (Co) and a ceramic phase including at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M is at least one of yttrium (Y), gadolinium (Gd), samarium (Sm), erbium (Er), scandium (Sc), ytterbium (Yb).

The method of any preceding clause, wherein the first electrode comprises a mixed ionic-electronic conductor including at least one of (M-Sr)TiO₃, M=La, Y; Sr₂MgMoO₆; (La,Sr)(Cr,Mn)O₃ (LSCM).

The method of any preceding clause, wherein the electrolyte comprises at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M is at least one of yttrium (Y), gadolinium (Gd), samarium (Sm), erbium (Er), scandium (Sc), ytterbium (Yb).

The method of any preceding clause, wherein the second electrode comprises a mixed ionic-electronic conductor including at least one of ABO₃, A=La, Sr, Ba, B=Co, Fe, Mn, Cr, doped barium cerate-zirconate ((Ba(Zr, Ce, M)O₃, M= Y, Gd, Sm, Er, Sc, Yb, Pr, Fe, Co, etc.), doped ceria, PrNiO₄.

The method of any preceding clause, wherein the first electrode further includes a catalyst composed of at least one of nickel (Ni), copper (Cu), cobalt (Co), iron (Fe), manganese (Mn), chromium (Cr), titanium (Ti), molybdenum (Mo), rhodium (Rh), ruthenium (Ru), doped ceria.

A system for utilizing wastewater from a syngas upgrading process, the system comprising: a solid oxide electrolyzer comprising an a first electrode, a second electrode and an electrolyte; a syngas upgrading unit that receives at least a portion of a syngas product stream from the solid oxide electrolyzer and generates a wastewater stream comprising water and a hydrocarbon species; and a recycle line that recycles the wastewater stream from the syngas upgrading unit to the solid oxide electrolyzer, wherein the solid oxide electrolyzer is configured to convert the hydrocarbon species to carbon monoxide (CO) and hydrogen (H₂) or carbon dioxide (CO₂) and water (H₂O), and perform electrolysis on the water of the wastewater stream to generate hydrogen (H₂).

The system of any preceding clause, wherein the electrolyte comprises at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M is at least one of yttrium (Y), gadolinium (Gd), samarium (Sm), erbium (Er), scandium (Sc), ytterbium (Yb).

The system of any preceding clause, wherein the first electrode comprises a composite phase that includes a metal phase including at least one of nickel (Ni), copper (Cu), iron (Fe), or cobalt (Co) and a ceramic phase including at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M is at least one of yttrium (Y), gadolinium (Gd), samarium (Sm), erbium (Er), scandium (Sc), ytterbium (Yb).

The system of any preceding clause, wherein the first electrode comprises a mixed ionic-electronic conductor including at least one of (M-Sr)TiO₃, M=La, Y; Sr₂MgMoO₆; (La,Sr)(Cr,Mn)O₃ (LSCM)

The system of any preceding clause, wherein the first electrode further includes a catalyst composed of at least one of nickel (Ni), copper (Cu), cobalt (Co), iron (Fe), manganese (Mn), chromium (Cr), titanium (Ti), molybdenum (Mo), rhodium (Rh), ruthenium (Ru), doped ceria.

The system of any preceding clause, wherein the second electrode comprises a mixed ionic-electronic conductor including at least one of ABO₃, A=La,Sr,Ba, B=Co,Fe,Mn,Cr, doped barium cerate-zirconate ((Ba(Zr, Ce, M)O₃, M= Y, Gd, Sm, Er, Sc, Yb, Pr, Fe, Co, etc.), doped ceria, PrNi₂O₄.

The system of any preceding clause, wherein the system further includes a carbon dioxide (CO₂) supply coupled to the wastewater stream to co-feed carbon dioxide (CO₂) to the first electrode with the wastewater stream.

The system of any preceding clause, wherein the syngas upgrading unit further comprises a separation unit configured to separate the wastewater stream from a product stream of the syngas upgrading unit.

The system of any preceding clause, wherein the recycle line is coupled to the separation unit.

The system of any preceding clause, wherein the syngas upgrading unit is configured to perform at least one of a Fisher Tropsch process, a methanol synthesis process, electrochemical process, or an alcohol synthesis.

The system of any preceding clause, wherein the solid oxide electrolyzer (SOE) is configured to operate at a temperature between about 400°C to about 1000°C.

## Claims

1. A method for wastewater utilization, the method comprising:
providing a wastewater stream (102) comprising water and a hydrocarbon species to a solid oxide electrolyzer (104) (SOE);
subjecting the wastewater stream (102) to electrolysis in the solid oxide electrolyzer (104); and
converting the hydrocarbon species in the wastewater stream (102) to carbon monoxide (CO) and hydrogen (H₂) or carbon dioxide (CO₂) and water (H₂O), and the water (H₂O) in the wastewater stream (102) to Hydrogen (H₂) via the electrolysis.

2. The method of claim 1, wherein the wastewater stream (102) is provided to a first electrode (128) of the solid oxide electrolyzer (104), the solid oxide electrolyzer (104) including an oxygen-ion conducting electrolyte (132).

3. The method of claim 1 or 2, wherein the wastewater stream (102) is provided to a second electrode (130) of the solid oxide electrolyzer (104), the solid oxide electrolyzer (104) including a proton conducting electrolyte (132).

4. The method of any preceding claim, wherein the wastewater stream (102) is recycled from a syngas upgrading process (114).

5. The method of claim 4, wherein the syngas upgrading process (114) is downstream of the solid oxide electrolyzer (104) (SOE) and receives at least a portion of a syngas product stream (110) from the solid oxide electrolyzer (104) (SOE).

6. The method of claim 4 or 5, wherein the wastewater stream (102) is recycled from the syngas upgrading process (114) without being subject to water treatment.

7. The method of any preceding claim, further comprising providing a carbon dioxide (CO₂) stream to the solid oxide electrolyzer (104) (SOE) with the wastewater stream (102).

8. A system (100) for utilizing wastewater from a syngas upgrading process, the system (100) comprising:
a solid oxide electrolyzer (104) comprising a first electrode (128), a second electrode (130) and an electrolyte (132);
a syngas upgrading unit (112) that receives at least a portion of a syngas product stream (110) from the solid oxide electrolyzer (104) and generates a wastewater stream (102) comprising water and a hydrocarbon species; and
a recycle line (120) that recycles the wastewater stream (102) from the syngas upgrading unit (112) to the solid oxide electrolyzer (104), wherein the solid oxide electrolyzer (104) is configured to convert the hydrocarbon species to carbon monoxide (CO) and hydrogen (H₂) or carbon dioxide (CO₂) and water (H₂O), and perform electrolysis on the water of the wastewater stream (102) to generate hydrogen (H₂).

9. The system of claim 8, wherein the electrolyte (132) comprises at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M is at least one of yttrium (Y), gadolinium (Gd), samarium (Sm), erbium (Er), scandium (Sc), ytterbium (Yb).

10. The system of claim 8 or 9, wherein the first electrode (128) comprises a composite phase that includes:
a metal phase including at least one of nickel (Ni), copper (Cu), iron (Fe), or cobalt (Co); and
a ceramic phase including at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M comprises at least one of yttrium (Y), gadolinium (Gd), samarium (Sm), erbium (Er), scandium (Sc), or ytterbium (Yb).

11. The system of any of claims 8 to 10, wherein the first electrode (128) comprises a mixed ionic-electronic conductor including at least one of (M-Sr)TiO₃, M=La, Y, Sr₂MgMoO₆, or (La,Sr)(Cr,Mn)O₃ (LSCM)

12. The system of claim 11, wherein the first electrode (128) further includes a catalyst comprising at least one of nickel (Ni), copper (Cu), cobalt (Co), iron (Fe), manganese (Mn), chromium (Cr), titanium (Ti), molybdenum (Mo), rhodium (Rh), ruthenium (Ru), or doped ceria.

13. The system of any of claims 8 to 12, wherein the second electrode (130) comprises a mixed ionic-electronic conductor including at least one of ABO₃, where A=La, Sr, or Ba, and B=Co, Fe, Mn, Cr, doped barium cerate-zirconate ((Ba(Zr, Ce, M)O₃, M= Y, Gd, Sm, Er, Sc, Yb, Pr, Fe, or Co), doped ceria, or PrNi₂O₄.

14. The system of any of claims 8 to 13, further comprising a carbon dioxide (108) (CO₂) supply coupled to the wastewater stream (102) to co-feed carbon dioxide (CO₂) to the first electrode with the wastewater stream (102).

15. The system of any of claims 8 to 14, wherein the syngas upgrading unit (112) further comprises a separation unit (114) configured to separate the wastewater stream (102) from a product stream (110) of the syngas upgrading unit (112) and the recycle line (120) is coupled to the separation unit (114).
